# EUROPEAN PATENT SPECIFICATION

(11) **EP 3 372 375 B1**
(45) Date of publication and mention of the grant of the patent: **10.04.2019**
(21) Application number: 17191434.4
(22) Date of filing: 15.09.2017
(51) Int. Cl.: B29C 45/16

(54) **SECONDARY MOLDING COMPONENT, ELECTRONIC COMPONENT, AND MANUFACTURING METHOD OF AN ELECTRONIC COMPONENT**
SEKUNDÄRE FORMKOMPONENTE, ELEKTRONISCHE KOMPONENTE UND HERSTELLUNGSVERFAHREN FÜR EINE ELEKTRONISCHE KOMPONENTE
COMPOSANT DE MOULAGE SECONDAIRE, COMPOSANT ÉLECTRONIQUE ET PROCÉDÉ DE FABRICATION D'UN COMPOSANT ÉLECTRONIQUE

(30) Priority: 10.03.2017 JP 2017046171
(43) Date of publication of application: 12.09.2018
(73) Proprietor: AISIN SEIKI KABUSHIKI KAISHA, Kariya-shi, Aichi-ken, 448-8650 (JP)
(72) Inventor: ARAI, Yohei, KARIYA-SHI, AICHI-KEN, 448-8650 (JP); TSURUTA, Kazuyoshi, KARIYA-SHI, AICHI-KEN, 448-8650 (JP); NODA, Takanori, KARIYA-SHI, AICHI-KEN, 448-8650 (JP)
(74) Representative: Intès, Didier Gérard André

(56) References cited:
- EP-A2- 1 614 518
- JP-A- 2005 109 027
- US-A- 5 153 052

## Description

### TECHNICAL FIELD

This disclosure relates to a secondary molding component including a primary molding portion that is made of resin and a secondary molding portion that covers at least a part of the primary molding portion and is made of resin, an electronic component, and a manufacturing method of the electronic component.

### BACKGROUND DISCUSSION

In the related art, there is a case in which electronic components such as a rotation sensor require a waterproofing performance for elements that are formed of hall ICs. In order to secure the waterproofing performance, an electronic component including a first molding portion (a sealing member in the reference document) that accommodate an element therein and is made of resin and a second molding portion (mold resin in the reference document) that is formed by insert-molding the first molding portion with resin is known (see JP 2010-84829A (Reference 1), for example). JP 2005 109027, EP 1 614 518, US 5 153 052 and DE 10 2013 005 485 all disclose inserts having circumferential ribs/ridges, wherein the overmolded material melts the ribs and thus fuses with them. The ribs/ridges have either rectangular, half-dome or tapered=triangular=acute cross sections (continuous from the bottom to the top of rib).

The electronic component described in Reference 1 has a mountain-shaped ring portion with a triangular sectional shape at the first molding portion, and a sharpened portion is provided at the tip end of the mountain-shaped ring portion. The waterproofing performance of the element is secured by melting the sharpened portion with molten resin for forming the second molding portion to form a fused portion and bonding the first molding portion to the second molding portion.

Incidentally, an electronic component such as a rotation sensor is exposed to a temperature environment in which an operating temperature is wide from a temperature that is equal to or below the freezing point (-40°C, for example) to a high temperature (150°C, for example) in a case of being used in a vehicle. Therefore, a first molding portion and a second molding portion are typically formed of a resin material containing a filler such as glass fiber to enhance heat resistance. On the other hand, the filler has a different orientation depending on a direction in which the resin flows during molding, and differences occur in thermal expansion coefficients of the resin depending on locations. Therefore, there is a concern in which cracking and peeling-off occur in the fused portion due to heat shrinkage of the resin caused by a temperature drop during use.

In the electronic equipment described in Reference 1, there is a concern that contraction stress is focused on the fused portion and cracking occurs since the contraction stress works along an inclined side surface of the mountain-shaped ring portion formed in the first molding portion in a direction, in which the second molding portion is pushed out (in a direction in which the second molding portion is separated from the first molding portion), due to the heat shrinkage of the resin, and there is still a room for improvement.

Thus, a need exists for a secondary molding component, an electronic component, and a manufacturing method of the electronic component, which secure the waterproofing performance, in which cracking hardly occurs in the fused portion even if a temperature change occurs during use.

### SUMMARY

The invention according to independent claim 1 is a secondary molding component (X) comprising:a first molding portion (2) that has a base portion (22A) and a projecting portion (24) projecting from an outer surface of the base portion (22A) and is made of resin; anda second molding portion (3) that has a bonded portion (32) bonded to a circumference of the projecting portion (24) and is made of resin,wherein the outer surface of the base portion (22A) is formed as an annular surface,wherein the projecting portion (24) has a fused portion (24A) that is fused with a part of the bonded portion (32) at an end opposite to the base portion (22A), and an interface (24B) between the projecting portion (24) and the bonded portion (32) has a portion that is formed so as to vertically stand from the base portion (22A)wherein the projecting portion (24) is provided in a circumferential direction of the annular surface and is formed of a plurality of the protrusions (24) that are aligned at an interval and that are formed into a rectangular shape in a sectional view in a projecting direction of the projecting portion and in a direction vertical to the interface (24B), and configured such that, before the bonded portion (32) is bonded, each of the projecting portion (22B) has a standing portion (22Ba) and a tapered portion (22Bb),wherein the standing portion (22Ba) vertically stands from the base portion (22A), and wherein the tapered portion (22Bb) has a narrower width toward a tip end formed at an end, which is opposite to the base portion (22A), of the standing portion (22Ba) in a sectional view in a standing direction of the standing portion (22Ba) and in a direction vertical to the interface (24B), and configured such that, after the bonded portion (32) is bonded, the fused portion (24A) is formed in a state in which at least the tapered portion (22Bb) is fused with the bonded portion (32), and the interface (24B) formed on both sides of the projecting portions (24) is discontinuous in the sectional view.

It is possible to secure a waterproofing performance of the secondary molding component by providing the projecting portion, which projects from the base portion, in the first molding portion and providing the bonded portion, which is bonded to the circumference of the projecting portion, in the second molding portion as in this configuration.

In this configuration, the interface that vertically stands from the base portion is formed between the projecting portion and the bonded portion. As a result, since contraction stress at the interface between the projecting portion and the bonded portion does not work in a direction in which the second molding portion is pushed out even in a case in which heat shrinkage occurs in the projecting portion or the bonded portion due to a temperature drop, the contraction stress is hardly focused on the fused portion. That is, since there is no disadvantage that the contraction stress is focused on the fused portion by pushing the entire second molding portion out along the inclined side surface of the first molding portion as in the related art, peeling-off hardly occurs between the first molding portion and the second molding portion.

Accordingly, it is possible to provide a secondary molding component, which secures the waterproofing performance, in which cracking hardly occurs in the fused portion even in a case in which a temperature change occurs during use.

Another feature resides in that, before the bonded portion is bonded, the projecting portion has a standing portion that vertically stands from the base portion and a tapered portion that has a narrower width toward a tip end formed at an end, which is opposite to the base portion, of the standing portion in a sectional view in a standing direction of the standing portion and in a direction vertical to the interface, and after the bonded portion is bonded, the fused portion is formed in a state in which at least the tapered portion is fused with the bonded portion, and the interface formed on both sides of the projecting portions is discontinuous in the sectional view.

In this configuration, the projecting portion before the bonded portion is bonded is formed of the standing portion that vertically stands from the base portion and the tapered portion that is formed at the end of the standing portion, and the interface formed on both sides of the standing portion is discontinuous by the fused portion formed by fusing at least the tapered portion to the bonded portion. That is, since the first molding portion and the second molding portion are bonded to each other by fusing the tapered portion formed at the end of the standing portion, it is possible to easily secure a fusion area that is equivalent to the width of the standing portion. A part of the end, which is opposite to the base portion, of the standing portion may also be melted in addition to the tapered portion, and even in such a case, it is possible to secure the fusion area corresponding to the width of the standing portion. As a result, bonding strength at the fusion surface is enhanced, and cracking hardly occurs in the fused portion.

Another feature resides in that the outer surface of the base portion is formed as an annular surface, and the projecting portion is a protrusion that is formed into a rectangular shape in a sectional view in a projecting direction of the projecting portion and in a direction vertical to the interface and is provided in a circumferential direction of the annular surface.

Since the contraction stress at the interface between the projecting portion and the bonded portion does not work in the direction in which the second molding portion is pushed out if the projecting portion is formed to have the rectangular sectional shape as in this configuration, the contraction stress is hardly focused on the fused portion, and peeling-off hardly occurs between the first molding portion and the second molding portion. Also, since the bonding strength at the fusion surface can be further enhanced by forming the projecting portion by the protrusion extending in the circumferential direction, cracking hardly occurs in the fused portion.

Another feature resides in that the projecting portion is formed of a plurality of the protrusions that are aligned at an interval.

If the projecting portion is formed of the plurality of protrusions as in the configuration, adjacent projecting portions contract in the alignment direction by a temperature drop and are brought into a state in which the bonded portion is sandwiched therebetween. As a result, even if the contraction stress works so as to separate the second molding portion from the first molding portion, the bonded portion is sandwiched between the adjacent projecting portions, and the second molding portion is not separated from the first molding portion. Therefore, cracking hardly occurs in the fused portion.

A feature of an electronic component according to an aspect of this disclosure resides in that the electronic component comprising: an element (1); a first molding portion (2) that accommodates the element (1) therein, has a base portion (22A) and a projecting portion (24) projecting from an outer surface of the base portion, and is made of resin; and a second molding portion (3) that covers at least the projecting portion (24), has a bonded portion (32) bonded to a circumference of the projecting portion (24), and is made of resin, wherein the outer surface of the base portion (22A) is formed as an annular surface, wherein the projecting portion has a fused portion (24A) that is fused with a part of the bonded portion (32) at an end opposite to the base portion (22A), and an interface (24B) between the projecting portion (24) and the bonded portion (32) has a portion that is formed so as to vertically stand from the base portion (22A), wherein the projecting portion (24) is provided in a circumferential direction of the annular surface and is formed of a plurality of the protrusions (24) that are aligned at an interval and that are formed into a rectangular shape in a sectional view in a projecting direction of the projecting portion and in a direction vertical to the interface (24B), and configured such that, before the bonded portion (32) is bonded, each of the projecting portion (22B) has a standing portion (22Ba) and a tapered portion (22Bb), wherein the standing portion (22Ba) vertically stands from the base portion (22A), and wherein the tapered portion (22Bb) has a narrower width toward a tip end formed at an end, which is opposite to the base portion (22A), of the standing portion (22Ba) in a sectional view in a standing direction of the standing portion (22Ba) and in a direction vertical to the interface (24B), and configured such that, after the bonded portion (32) is bonded, the fused portion (24A) is formed in a state in which at least the tapered portion (22Bb) is fused with the bonded portion (32), and the interface (24B) formed on both sides of the projecting portions (24) is discontinuous in the sectional view.

If the projecting portion projecting from the base portion is provided in the first molding portion, and the bonded portion bonded to the circumference of the projecting portion is provided in the second molding portion as in the configuration, it is possible to secure the waterproofing performance of the element.

Also, the interface that vertically stands from the base portion is formed between the projecting portion and the bonded portion in this configuration. As a result, since the contraction stress at the interface between the projecting portion and the bonded portion does not work in the direction in which the second molding portion is pushed out even in a case in which heat shrinkage occurs in the projecting portion and the bonded portion due to a temperature drop, the contraction stress is hardly focused on the fused portion. That is, since there is no disadvantage that the contraction stress is focused on the fused portion by pushing the entire second molding portion out along the inclined side surface of the first molding portion as in the related art, peeling-off hardly occurs between the first molding portion and the second molding portion.

Accordingly, it is possible to provide an electronic component, which secures the waterproofing performance, in which cracking hardly occurs in the fused portion even in a case in which a temperature change occurs during use.

Another invention according to claim 3 is a manufacturing method of an electronic component comprising: a first process of manufacturing a first molding portion (2) including a base portion (22A), a standing portion (22Ba) that vertically stands from the base portion (22A) in a circumferential direction, and a tapered portion (22Bb) that has a narrower width toward a tip end formed at an end, which is opposite to the base portion (22A), of the standing portion (22Ba) in a sectional view in a standing direction of the standing portion (22Ba) and in a direction vertical to the circumferential direction, by insert-molding an element (1) with resin; and a second process of manufacturing a second molding portion (3) that is bonded to the first molding portion (2) by insert-mo!ding the first molding portion (2) with resin and fusing at least the tapered portion (22Bb) thereto, leaving a protrusion (22B) formed into a rectangular shape in a sectional view in a projecting direction of the protrusion and in a direction vertical to the interface (24B).

In the method, the first molding portion is formed of the standing portion that vertically stands from the base portion and the tapered portion that is formed at the end of the standing portion, and at least the tapered portion is fused. As a result, it is possible to secure the waterproofing performance of the secondary molding component.

Furthermore, since the first molding portion and the second molding portion are bonded to each other by fusing at least the tapered portion, it is possible to easily secure the fusion area equivalent to the width of the standing portion. A part of the end, which is opposite to the base portion, of the standing portion may also be melted in addition to the tapered portion, and even in such a case, it is possible to secure the fusion area corresponding to the width of the standing portion. As a result, bonding strength at the fusion surface is enhanced, and cracking hardly occurs in the fused portion. Accordingly, it is possible to provide a manufacturing method of an electronic component, which secures the waterproofing performance, in which cracking hardly occurs in the fused portion even in a case in which a temperature change occurs during use.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a sectional view of an electronic component according to an embodiment;
Fig. 2 is a perspective view of a first molding portion before insert-molding according to the embodiment;
Fig. 3 is a sectional view illustrating the first molding portion before the insert-molding in an enlarged manner according to the embodiment;
Fig. 4 is an explanatory diagram of illustrating a manufacturing method of a rotation sensor according to the embodiment;
Fig. 5 is a sectional view illustrating the first molding portion during the insert-molding in an enlarged manner according to the embodiment;
Fig. 6 is a comparison diagram illustrating a state when heat shrinkage has occurred; and
Fig. 7 is a comparison diagram illustrating a heat shrinkage simulation result.

### DETAILED DESCRIPTION

Hereinafter, embodiments of a secondary molding component, an electronic component, and a manufacturing method of an electronic component according to this disclosure will be described with reference to the drawings. In the embodiments, a rotation sensor X will be described as an example of the secondary molding component and the electronic component. However, the secondary molding component and the electronic component are not limited to the following embodiments, and various modifications can be made.

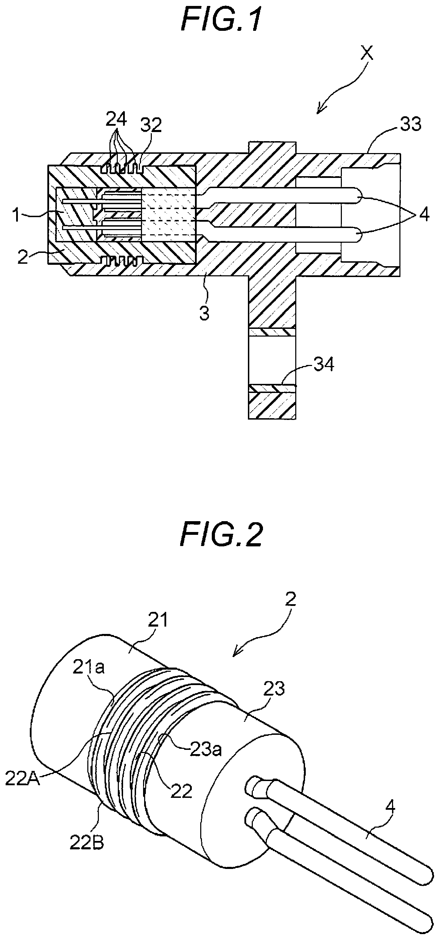

As illustrated in Fig. 1, the rotation sensor X according to an embodiment is a sensor that detects a rotation state of a wheel of a vehicle, for example. The rotation sensor X includes an element 1, a case 2 (an example of the first molding portion) that accommodates the element 1 in an inner circumference thereof, and a housing 3 (an example of the second molding portion) that covers at least a part of the case 2.

The element 1 is formed of a hall integrated circuit (IC), an electric coil, or the like as a magneto-electric transducer. A terminal 4 that is electrically connected to an external drive circuit (not illustrated) is fixed to the element 1. The element 1 may be formed of a diode, a transistor, a thermistor, or the like in accordance with a purpose and is not particularly limited.

The case 2 is formed into a cylindrical shape by insert-molding the element 1 and the terminal 4 with resin. The case 2 is formed of a resin material with heat resistance that includes glass fiber or the like as a filler mixed into nylon, polyphenylene sulfide (PPS), or the like. The case 2 is further insert-molded with resin, thereby forming the housing 3.

As illustrated in Fig. 2, the case 2 before being insert-molded into the housing 3 has an element accommodating portion 21 that accommodates the element 1, a terminal fixing portion 23 that fixes a base end portion of the exposed terminal 4, and a groove portion 22 that is recessed toward the inner side in a radial direction between the element accommodating portion 21 and the terminal fixing portion 23. The groove portion 22 has a first wall 21a that is formed at a boundary with the element accommodating portion 21, a second wall 23a that is formed at a boundary with the terminal fixing portion 23, and a base portion 22A that couples the first wall 21a and the second wall 23a. The outer surface of the base portion 22A is formed of an annular surface, and a plurality of (four in the embodiment) protrusions 22B are formed in the circumferential direction in the annular surface so as to project to the outer side in the radial direction. Each of the plurality of protrusions 22B are aligned at an interval in the longitudinal direction of the case 2.

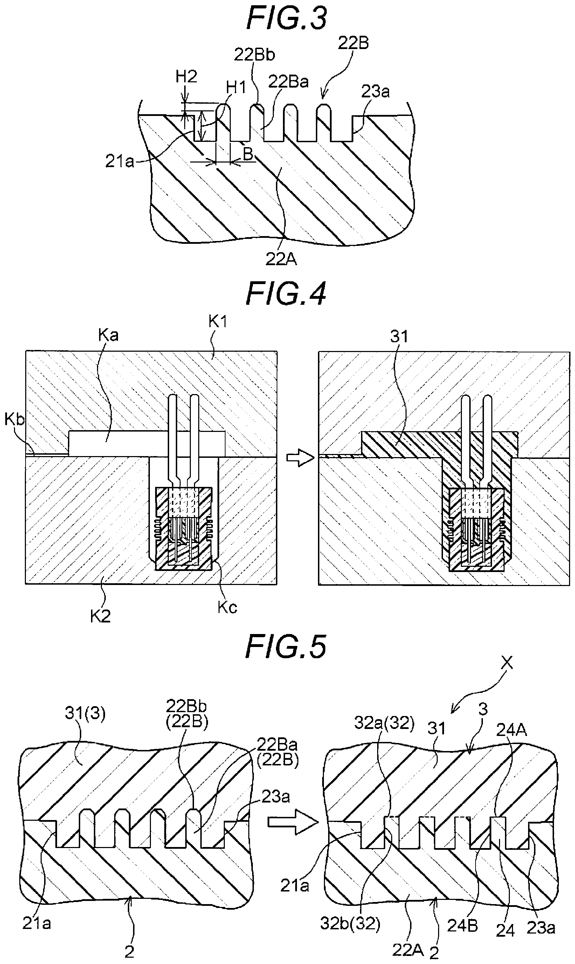

As illustrated in Fig. 3, each protrusions 22B has a standing portion 22Ba that vertically stands from the base portion 22A and a tapered portion 22Bb that is formed at an end, which is opposite to the base portion 22A, of the standing portion 22Ba and has an arc sectional shape with a narrower width toward the tip end thereof. The tapered portion 22Bb is melted when the case 2 is insert-molded into the housing 3, and is then fused with the mold resin 31 that forms the housing 3, which will be described later (Fig. 5). The height H2 of the tapered portion 22Bb is set to be equal to or less than 0.1 to 0.5 times, preferably from 0.1 to 0.3 times (0.2 times in the embodiment) as high as the height H1 of the standing portion 22Ba. In this manner, at least the tapered portion 22Bb is quickly fused and is fused with the mold resin 31 so as to have a width B of the standing portion 22Ba. In this manner, it is possible to secure a large fusion area. A part of the end, which is opposite to the base portion 22A, of the standing portion 22Ba may also be melted in addition to the tapered portion 22Bb, and even in such a case, it is possible to secure the fusion area corresponding to the width of the standing portion 22Ba.

As illustrated in the right diagram of Fig. 5, the plurality of protrusions 22B are changed to a plurality of projecting portions 24 with rectangular sectional shapes that project from the annular-shaped outer surface of the base portion 22A in the case 2 after being insert-molded. The plurality of projecting portions 24 are aligned at an interval in a state of being formed in the circumferential direction in the same manner as the plurality of protrusions 22B before being insert-molded.

Each projecting portion 24 has a fused portion 24A that is fused with the mold resin 31 of the housing 3 at the end opposite to the base portion 22A, and an interface 24B between both side surfaces of the projecting portion 24 and the mold resin 31 is not fully fused and has a straight shape that vertically stands from the base portion 22A. The fused portion 24A is integrated with the mold resin 31 in a state in which substantially no interface can be visually recognized due to melting heat of the mold resin 31. As a result, the interface 24B formed on both side surfaces of the projecting portion 24 is discontinuous (not connected) by the fused portion 24A (the dotted portion in the right diagram of Fig. 5). Fig. 5 is a sectional view in the projecting direction of the projecting portion 24 and the direction vertical to the interface 24B (vertical to the circumferential direction).

The mold resin 31 forming the housing 3 is formed of a resin material with heat resistance that is obtained by mixing glass fiber or the like as a filler into nylon, polyphenylene sulfide (PPS), or the like. In the embodiment, the resin forming the case 2 and the mold resin 31 forming the housing 3 are formed of the same resin material. Since the filler has a different orientation depending a direction in which the mold resin 31 flows during molding, a difference occurs in thermal expansion coefficients of the resin depending on locations. In particular, since the fillers have random orientations in the mold resin 31 on the inner side that is adjacent to the projecting portions 24 of the case 2 and in the resin of the projecting portion 24, there is a large difference in the thermal expansion coefficients.

As illustrated in Figs. 1 and 5, the housing 3 has a bonded portion 32 to which the mold resin 31 in a melted state is solidified and bonded to the circumference of the projecting portion 24, a connector portion 33 that accommodates an end of the terminal 4, and a bracket portion 34 that is attached to a vehicle. The bonded portion 32 is formed in a recessed shape so as to sandwich the projecting portions 24 with the rectangular sectional shapes therebetween in a state in which substantially no interface cannot be visually recognized since a bottom portion 32a is integrated with the fused portions 24A of the projecting portions 24. Also, a side wall inner surface 32b of the bonded portion 32 formed into the recessed shape is bonded to both side surfaces of each projecting portion 24 in a state in which the interface 24B can be visually recognized.

Subsequently, a manufacturing method of the rotation sensor X according to the embodiment will be described with reference to Figs. 4 and 5. First, the element 1 and the terminal 4 are insert-molded with resin by using a mold, which is not illustrated, thereby manufacturing the case 2. In this manner, the case 2 that has the base portion 22A, the standing portion 22Ba that vertically stands from the base portion 22A in the circumferential direction, the tapered portion 22Bb that has a narrower width toward the tip end formed at the end, which is opposite to the base portion 22A, of the standing portion 22Ba in a sectional view in the standing direction of the standing portion 22Ba and in the direction vertical to the circumferential direction is primarily molded as illustrated in Figs. 2 and 3.

Next, the primarily molded case 2 is arranged in a cavity Ka formed between an upper mold K1 and a lower mold K2, and the case 2 is retained by the retaining groove Kc formed at the bottom portion of the lower mold K2 as illustrated in the left diagram of Fig. 4. Then, the mold resin 31 in the melted state is poured into the cavity Ka from an injection groove Kb formed at the bottom portion of the upper mold K1 (see the right diagram of Fig. 4). At this time, the mold resin 31 enters the circumference of the plurality of protrusions 22B formed in the case 2 as illustrated in the left diagram of Fig. 5. Then, at least the tapered portions 22Bb of the protrusions 22B are melted by melting heat of the mold resin 31.

Then, the mold resin 31 is cooled and solidified, thereby fixing and the mold resin 31 to the circumference of the case 2, forming the housing 3, and completing the rotation sensor X as a secondary molding component. At this time, the plurality of protrusions 22B have been changed to the plurality of projecting portions 24 with the rectangular sectional shapes projecting from the outer surface of the base portion 22A as illustrated in the right diagram of Fig. 5. The fused portions 24A fused with the mold resin 31 formed at the end opposite to the base portion 22A are formed in the projecting portions 24, and the interface 24B between both side surfaces of the projecting portions 24 and the bonded portion 32 (mold resin 31) of the housing 3 has a straight shape that vertically stands from the base portion 22A.

It is possible to secure the waterproofing performance of the secondary molding component by providing the projecting portions 24 projecting from the base portion 22A in the case 2 and providing the bonded portion 32 (mold resin 31) of the housing 3 in the circumference of the projecting portions 24 as in the embodiment.

Also, the interface 24B that vertically stands from the base portion 22A is formed between the projecting portions 24 and the bonded portion 32. In the projecting portions 24, a plurality of protrusions with rectangular sectional shapes provided in the circumferential direction are aligned at an interval. As a result, since the contraction stress at the interface 24B between the projecting portions 24 and the bonded portion 32 does not work in the direction in which the housing 3 is pushed out (the direction in which the housing 3 is separated from the case 2) even in a case in which heat shrinkage occurs in the projecting portions 24 or the bonded portion 32 due to a large temperature drop, the contraction stress is hardly focused on the fused portions 24A, and cracking hardly occurs in the fused portions 24A. Furthermore, since each projecting portion 24 before being insert-molded is formed of the standing portions 22Ba and the tapered portions 22Bb, at least the tapered portions 22Bb are quickly melted, and a large fusion area can be secured. As a result, bonding strength of the fusion surface is enhanced, and cracking hardly occurs in the fused portions 24A. A part of the end, which is opposite to the base portion 22A, of the standing portions 22Ba may also be melted in addition to the tapered portions 22Bb, and even in such a case, it is possible to secure the fusion area corresponding to the width of the standing portions 22Ba.

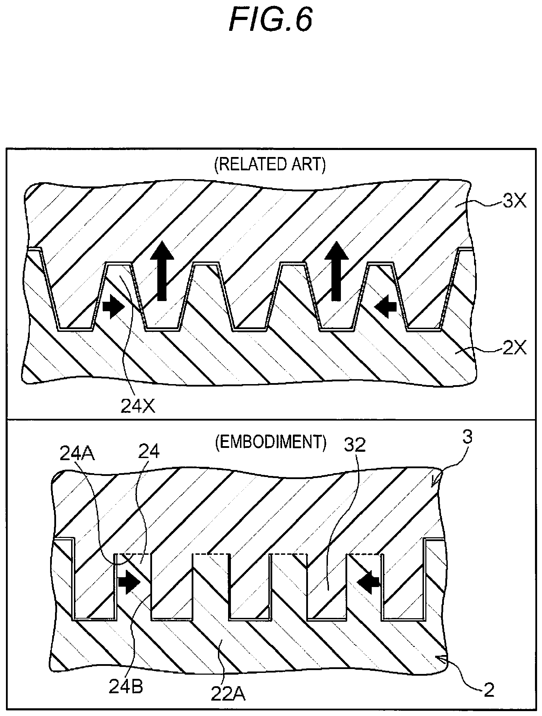

Furthermore, detailed description will be given. Fig. 6 is an explanatory diagram illustrating a state in which heat shrinkage has occurred in resin due to a large temperature drop. In the example in the related art in which the tip end of the mountain-shaped ring portion with the triangular sectional shape formed in a case 2X is melted and formed with projecting portions 24X with a trapezoidal shape as illustrated in the upper diagram of Fig. 6, the adjacent projecting portions 24X shrinks in the alignment direction, and contraction stress works such that the entire housing 3X moves in a direction away from the case 2X along the inclined side surface. In contrast, since the interface 24B between both side surfaces of the projecting portions 24 and the bonded portion 32 of the housing 3 has a straight shape that vertically stands from the base portion 22A in the embodiment as illustrated in the lower diagram of Fig. 6, the adjacent projecting portions 24 shrink in the alignment direction, and the bonded portion 32 is sandwiched therebetween. At this time, the bonded portion 32 is fastened by the adjacent projecting portions 24, and the entire housing 3 hardly moves in the direction away from the case 2. As a result, there is no disadvantage that the contraction stress is focused on the fused portions 24A, and peeling-off thus hardly occurs in the fused portions 24A, in particular.

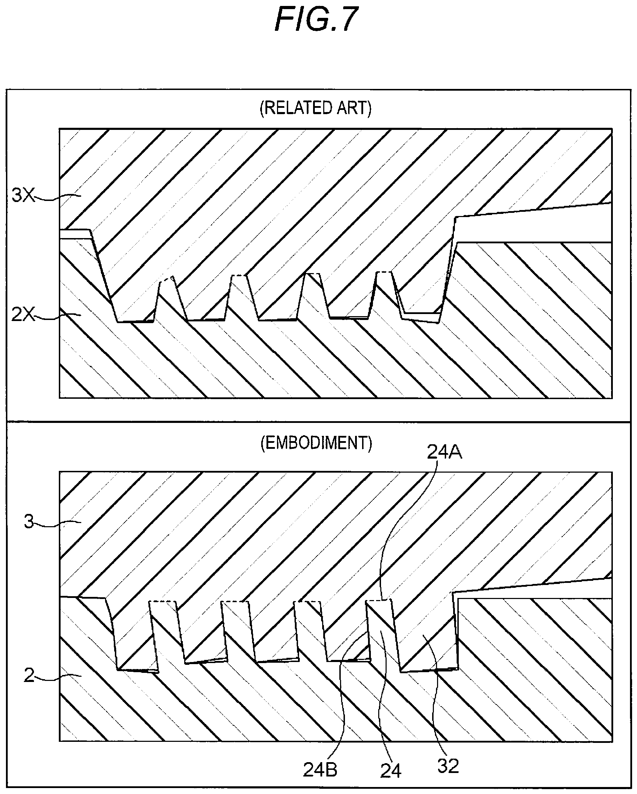

Fig. 7 illustrates a simulation result in which a rotation sensor in the related art (upper diagram) and the rotation sensor X according to the embodiment (lower diagram) were cooled from 150°C to -40°C. As illustrated in the upper diagram of Fig. 7, it is possible to recognize that the housing 3X was considerably separated from the case 2X so as to be pushed out in the rotation sensor in the related art. In contrast, the housing 3 was slightly separated from the case 2 while the bonding state between the projecting portions 24 of the case 2 and the bonded portion 32 of the housing 3 was satisfactorily maintained in the rotation sensor X according to the embodiment as illustrated in the lower diagram of Fig. 7. The contraction stress in the fused site in the related art is about two to three times as high as the contraction stress in the fused portions 24A according to the embodiment. Based on these facts, since there was no disadvantage that the contraction stress was focused on the fused portions 24A, it was possible to verify that peeling-off and cracking hardly occurred in the fused portions 24A in the rotation sensor X according to the embodiment.

### Other Embodiments

(1) Although the plurality of protrusions 22B before the insert-molding and the plurality of projecting portions 24 are provided in the circumferential direction in the case 2 according to the aforementioned embodiment, the arrangement ranges and the numbers are not particularly limited. For example, the protrusions 22B and the projecting portions 24 may be successively arranged at an equal interval in the circumferential direction, or may be provided at one location between the first wall 21a and the second wall 23a.
(2) Although the protrusions 22B have the tapered portions 22Bb formed to have an arc-shaped sectional shape in the aforementioned embodiment, the shape of the tapered portions 22Bb is not particularly limited as long as the shape has a narrower width toward the tip end. For example, the tapered portions 22Bb may be formed into a triangular sectional shape or a trapezoidal sectional shape, or may be formed into a stepped sectional shape.
(3) The electronic component according to the embodiment is not limited to the rotation sensor X, and the electronic component may be formed as a position sensor or a load sensor, for example, as long as the housing 3 is formed by insert-molding the case 2 accommodating the element 1 therein in the secondary molding component.

This disclosure can be used for various electronic components that have a first molding portion that is formed by insert-molding an element and a second molding portion that is formed by insert-molding the first molding portion.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention as defined in the claims. Accordingly, it is expressly intended that all such variations, changes and equivalents which fall within the scope of the present invention as defined in the claims, be embraced thereby.

## Claims

1. A secondary molding component (X) comprising:
a first molding portion (2) that has a base portion (22A) and a projecting portion (24) projecting from an outer surface of the base portion (22A) and is made of resin; and
a second molding portion (3) that has a bonded portion (32) bonded to a circumference of the projecting portion (24) and is made of resin,
wherein the outer surface of the base portion (22A) is formed as an annular surface,
wherein the projecting portion (24) has a fused portion (24A) that is fused with a part of the bonded portion (32) at an end opposite to the base portion (22A), and
an interface (24B) between the projecting portion (24) and the bonded portion (32) has a portion that is formed so as to vertically stand from the base portion (22A)
wherein the projecting portion (24) is provided in a circumferential direction of the annular surface and is formed of a plurality of the protrusions (24) that are aligned at an interval and that are formed into a rectangular shape in a sectional view in a projecting direction of the projecting portion and in a direction vertical to the interface (24B), and
configured such that, before the bonded portion (32) is bonded, each of the projecting portion (22B) has a standing portion (22Ba) and a tapered portion (22Bb),
wherein the standing portion (22Ba) vertically stands from the base portion (22A), and
wherein the tapered portion (22Bb) has a narrower width toward a tip end formed at an end, which is opposite to the base portion (22A), of the standing portion (22Ba) in a sectional view in a standing direction of the standing portion (22Ba) and in a direction vertical to the interface (24B), and
configured such that, after the bonded portion (32) is bonded, the fused portion (24A) is formed in a state in which at least the tapered portion (22Bb) is fused with the bonded portion (32), and the interface (24B) formed on both sides of the projecting portions (24) is discontinuous in the sectional view.

2. An electronic component (X) comprising:
an element (1);
a first molding portion (2) that accommodates the element (1) therein, has a base portion (22A) and a projecting portion (24) projecting from an outer surface of the base portion, and is made of resin; and
a second molding portion (3) that covers at least the projecting portion (24), has a bonded portion (32) bonded to a circumference of the projecting portion (24), and is made of resin,
wherein the outer surface of the base portion (22A) is formed as an annular surface,
wherein the projecting portion has a fused portion (24A) that is fused with a part of the bonded portion (32) at an end opposite to the base portion (22A), and
an interface (24B) between the projecting portion (24) and the bonded portion (32) has a portion that is formed so as to vertically stand from the base portion (22A),
wherein the projecting portion (24) is provided in a circumferential direction of the annular surface and is formed of a plurality of the protrusions (24) that are aligned at an interval and that are formed into a rectangular shape in a sectional view in a projecting direction of the projecting portion and in a direction vertical to the interface (24B), and
configured such that, before the bonded portion (32) is bonded, each of the projecting portion (22B) has a standing portion (22Ba) and a tapered portion (22Bb),
wherein the standing portion (22Ba) vertically stands from the base portion (22A), and
wherein the tapered portion (22Bb) has a narrower width toward a tip end formed at an end, which is opposite to the base portion (22A), of the standing portion (22Ba) in a sectional view in a standing direction of the standing portion (22Ba) and in a direction vertical to the interface (24B), and
configured such that, after the bonded portion (32) is bonded, the fused portion (24A) is formed in a state in which at least the tapered portion (22Bb) is fused with the bonded portion (32), and the interface (24B) formed on both sides of the projecting portions (24) is discontinuous in the sectional view.

3. A manufacturing method of an electronic component comprising:
a first process of manufacturing a first molding portion (2) including a base portion (22A), a standing portion (22Ba) that vertically stands from the base portion (22A) in a circumferential direction, and a tapered portion (22Bb) that has a narrower width toward a tip end formed at an end, which is opposite to the base portion (22A), of the standing portion (22Ba) in a sectional view in a standing direction of the standing portion (22Ba) and in a direction vertical to the circumferential direction, by insert-molding an element (1) with resin; and
a second process of manufacturing a second molding portion (3) that is bonded to the first molding portion (2) by insert-molding the first molding portion (2) with resin and fusing at least the tapered portion (22Bb) thereto, leaving a protrusion (22B) formed into a rectangular shape in a sectional view in a projecting direction of the protrusion and in a direction vertical to the interface (24B).

## Patentansprüche

1. Sekundäre Formkomponente (X) umfassend:
einen ersten Formteil (2), der einen Bodenteil (22A) und einen vorstehenden Teil (24), der von einer äußeren Fläche des Bodenteils (22A) vorsteht, aufweist und aus Harz hergestellt ist, und
einen zweiten Formteil (3), der einen verbundenen Teil (32), der mit einem Umfang des vorstehenden Teils (24) verbunden ist, aufweist und aus Harz hergestellt ist,
wobei die äußere Fläche des Bodenteils (22A) als eine ringförmige Fläche gebildet ist,
wobei der vorstehende Teil (24) einen verschmolzenen Teil (24A) aufweist, der mit einem Teil des verbundenen Teils (32) an einem Ende gegenüber dem Bodenteil (22A) verschmolzen ist, und
eine Grenzfläche (24B) zwischen dem vorstehenden Teil (24) und dem verbundenen Teil (32) einen Teil aufweist, der derart gebildet ist, dass er vertikal auf dem Bodenteil (22A) steht,
wobei der vorstehende Teil (24) in einer Umfangsrichtung der ringförmigen Fläche bereitgestellt ist und aus mehreren der Vorsprünge (24) gebildet ist, die in einem Abstand angeordnet sind und die in eine rechteckige Form in einer Querschnittsansicht in einer vorstehenden Richtung des vorstehenden Teils und in einer Richtung vertikal zu der Grenzfläche (24B) gebildet sind, und
derart ausgebildet ist, dass, bevor der verbundene Teil (32) verbunden wird, jeder vorstehende Teil (22B) einen stehenden Teil (22Ba) und einen sich verjüngenden Teil (22Bb) aufweist,
wobei der stehende Teil (22Ba) vertikal auf dem Bodenteil (22A) steht und
wobei der sich verjüngende Teil (22Bb) eine schmalere Breite zu einem Spitzenende, das an einem Ende gebildet ist, welches dem Bodenteil (22A) gegenüberliegt, des stehenden Teils (22Ba) in einer Querschnittsansicht in einer stehenden Richtung des stehenden Teils (22Ba) und in einer Richtung vertikal zu der Grenzfläche (24B) aufweist, und
derart ausgebildet ist, dass, nachdem der verbundene Teil (32) verbunden ist, der verschmolzene Teil (24A) in einem Zustand, in welchem mindestens der sich verjüngende Teil (22Bb) mit dem verbundenen Teil (32) verschmolzen ist, gebildet ist und die Grenzfläche (24B), die auf beiden Seiten der vorstehenden Teile (24) gebildet ist, in der Querschnittsansicht unterbrochen ist.

2. Elektronische Komponente (X) umfassend:
ein Element (1),
einen ersten Formteil (2), in dem das Element (1) aufgenommen ist, der einen Bodenteil (22A) und einen vorstehenden Teil (24), der von einer äußeren Fläche des Bodenteils vorsteht, aufweist und aus Harz hergestellt ist, und
einen zweiten Formteil (3), der mindestens den vorstehenden Teil (24) abdeckt, einen verbundenen Teil (32), der mit einem Umfang des vorstehenden Teils (24) verbunden ist, aufweist und aus Harz hergestellt ist,
wobei die äußere Fläche des Bodenteils (22A) als eine ringförmige Fläche gebildet ist,
wobei der vorstehende Teil einen verschmolzenen Teil (24A) aufweist, der mit einem Teil des verbundenen Teils (32) an einem Ende gegenüber dem Bodenteil (22A) verschmolzen ist, und
eine Grenzfläche (24B) zwischen dem vorstehenden Teil (24) und dem verbundenen Teil (32) einen Teil aufweist, der derart gebildet ist, dass er vertikal auf dem Bodenteil (22A) steht,
wobei der vorstehende Teil (24) in einer Umfangsrichtung der ringförmigen Fläche bereitgestellt ist und aus mehreren der Vorsprünge (24) gebildet ist, die in einem Abstand angeordnet sind und die in eine rechteckige Form in einer Querschnittsansicht in einer vorstehenden Richtung des vorstehenden Teils und in einer Richtung vertikal zu der Grenzfläche (24B) gebildet sind, und
derart ausgebildet ist, dass, bevor der verbundene Teil (32) verbunden ist, jeder vorstehende Teil (22B) einen stehenden Teil (22Ba) und einen sich verjüngenden Teil (22Bb) aufweist,
wobei der stehende Teil (22Ba) vertikal auf dem Bodenteil (22A) steht, und
wobei der sich verjüngende Teil (22Bb) eine schmalere Breite zu einem Spitzenende, das an einem Ende gebildet ist, welches dem Bodenteil (22A) gegenüberliegt, des stehenden Teils (22Ba) in einer Querschnittsansicht in einer stehenden Richtung des stehenden Teils (22Ba) und in einer Richtung vertikal zu der Grenzfläche (24B) aufweist, und
derart ausgebildet ist, dass, nachdem der verbundene Teil (32) verbunden ist, der verschmolzene Teil (24A) in einem Zustand, in welchem mindestens der sich verjüngende Teil (22Bb) mit dem verbundenen Teil (32) verschmolzen ist, gebildet ist und die Grenzfläche (24B), die auf beiden Seiten der vorstehenden Teile (24) gebildet ist, in der Querschnittsansicht unterbrochen ist.

3. Herstellungsverfahren einer elektronischen Komponente umfassend:
einen ersten Prozess der Herstellung eines ersten Formteils (2), der einen Bodenteil (22A), einen stehenden Teil (22Ba), der vertikal auf dem Bodenteil (22A) in einer Umfangsrichtung steht, und einen sich verjüngenden Teil (22Bb), der eine schmalere Breite zu einem Spitzenende, das an einem Ende gebildet ist, welches dem Bodenteil (22A) gegenüberliegt, des stehenden Teils (22Ba) in einer Querschnittsansicht in einer stehenden Richtung des stehenden Teils (22Ba) und in einer Richtung vertikal zu der Umfangsrichtung aufweist, durch Umspritzen eines Elements (1) mit Harz, und
einen zweiten Prozess des Herstellens eines zweiten Formteils (3), der an den ersten Formteil (2) verbunden ist, durch Umspritzen des ersten Formteils (2) mit Harz und Verschmelzen mindestens des sich verjüngenden Teils (22Bb) mit diesem, wobei ein Vorsprung (22B) zurückgelassen wird, der in eine rechteckige Form in einer Querschnittsansicht in einer vorstehenden Richtung des Vorsprungs und in einer Richtung vertikal zu der Grenzfläche (24B) gebildet ist.

## Revendications

1. Composant de moulage secondaire (X) comprenant :
une première partie de moulage (2) qui a une partie de base (22A) et une partie en saillie (24) faisant saillie d'une surface externe de la partie de base (22A) et est réalisée en résine ; et
une seconde partie de moulage (3) qui a une partie reliée (32) reliée à une circonférence de la partie en saillie (24) et est réalisée en résine,
dans lequel la surface externe de la partie de base (22A) est formée comme une surface annulaire,
dans lequel la partie en saillie (24) a une partie fondue (24A) qui est fondue avec une partie de la partie reliée (32) au niveau d'une extrémité opposée à la partie de base (22A), et
une interface (24B) entre la partie en saillie (24) et la partie reliée (32) qui a une partie qui est formée afin de se dresser verticalement à partir de la partie de base (22A),
dans lequel la partie en saillie (24) est prévue dans une direction circonférentielle d'une surface annulaire et est formée avec une pluralité de saillies (24) qui sont alignées à un intervalle et qui sont formées selon une forme rectangulaire sur une vue en coupe dans une direction de saillie de la partie en saillie et dans une direction verticale par rapport à l'interface (24B), et
configuré de sorte que, avant que la partie reliée (32) ne soit reliée, chacune des parties en saillie (22B) a une partie droite (22Ba) et une partie effilée (22Bb),
dans lequel la partie droite (22Ba) se dresse verticalement à partir de la partie de base (22A), et
dans lequel la partie effilée (22Bb) a une largeur plus étroite vers une extrémité de pointe formée au niveau d'une extrémité, qui est opposée à la partie de base (22A), de la partie droite (22Ba) sur une vue en coupe dans une direction droite de la partie droite (22Ba) et dans la direction verticale par rapport à l'interface (24B), et
configuré de sorte que, après que la partie reliée (32) a été reliée, la partie fondue (24A) est formée dans un état dans lequel au moins la partie effilée (22Bb) est fondue avec la partie reliée (32), et l'interface (24B) formée des deux côtés des parties en saillie (24) est discontinue sur la vue en coupe.

2. Composant électronique (X) comprenant :
un élément (1) ;
une première partie de moulage (2) qui loge l'élément (1) à l'intérieur de cette dernière, a une partie de base (22A) et une partie en saillie (24) faisant saillie d'une surface externe de la partie de base, et est réalisée en résine ; et
une seconde partie de moulage (3) qui recouvre au moins la partie en saillie (24), a une partie reliée (32) reliée à une circonférence de la partie en saillie (24) et est réalisée en résine,
dans lequel la surface externe de la partie de base (22A) est formée comme une surface annulaire,
dans lequel la partie en saillie a une partie fondue (24A) qui est fondue avec une partie de la partie reliée (32) au niveau d'une extrémité opposée à la partie de base (22A), et
une interface (24B) entre la partie en saillie (24) et la partie reliée (32) a une partie qui est formée pour se dresser verticalement à partir de la partie de base (22A),
dans lequel la partie en saillie (24) est prévue dans une direction circonférentielle de la surface annulaire et est formée avec une pluralité de saillies (24) qui sont alignées à un intervalle et qui sont formées selon une forme rectangulaire sur une vue en coupe dans une direction en saillie de la partie en saillie et dans une direction verticale par rapport à l'interface (24B), et
configuré de sorte que, avant que la partie reliée (32) ne soit reliée, chacune des parties en saillie (22B) a une partie droite (22Ba) et une partie effilée (22Bb),
dans lequel la partie droite (22Ba) se dresse verticalement à partir de la partie de base (22A), et
dans lequel la partie effilée (22Bb) a une largeur plus étroite vers une extrémité de pointe formée au niveau d'une extrémité, qui est opposée à la partie de base (22A), de la partie droite (22Ba) sur une vue en coupe dans une direction droite de la partie droite (22Ba) et dans une direction verticale par rapport à l'interface (24B), et
configuré de sorte que, après que la partie reliée (32) a été reliée, la partie fondue (24A) est formée dans un état dans lequel au moins la partie effilée (22Bb) est fondue avec la partie reliée (32), et l'interface (24B) formée des deux côtés des parties en saillie (24) est discontinue sur la vue en coupe.

3. Procédé de fabrication d'un composant électronique comprenant :
un premier processus de fabrication d'une première partie de moulage (2) comprenant une partie de base (22A), une partie droite (22Ba) qui se dresse verticalement à partir de la partie de base (22A) dans une direction circonférentielle, et une partie effilée (22Bb) qui a une largeur plus étroite vers une extrémité de pointe formée au niveau d'une extrémité, qui est opposée à la partie de base (22A), de la partie droite (22Ba) sur une vue en coupe dans une direction droite de la partie droite (22Ba) et dans une direction verticale par rapport à la direction circonférentielle, en moulant par insertion un élément (1) avec de la résine ; et
un second processus pour fabriquer une seconde partie de moulage (3) qui est reliée à la première partie de moulage (2) en moulant par insertion la première partie de moulage (2) avec de la résine et en faisant fondre au moins la partie effilée (22Bb) sur cette dernière, laissant une saillie (22B) formée dans une forme rectangulaire sur une vue en coupe, dans une direction de saillie de la saillie et dans une direction verticale par rapport à l'interface (24B).
